# EUROPÄISCHE PATENTSCHRIFT

(11) **EP 0 601 553 B1**
(45) Veröffentlichungstag und Bekanntmachung des Hinweises auf die Patenterteilung: **08.10.1997**
(21) Anmeldenummer: 93119749.5
(22) Anmeldetag: 08.12.1993
(51) Int. Cl.: H04N 7/20, H04N 5/44

(54) **Fernsehempfänger zur Wiedergabe von terrestrisch und über Satellit übertragenen Fernsehsignalen**
Television receiver with reproduction of terrestrial and satellite television signals
Récepteur de télévision avec reproduction des signaux terrestres et satellite

(30) Priorität: 10.12.1992 DE 4241599
(43) Veröffentlichungstag der Anmeldung: 15.06.1994
(73) Patentinhaber: GRUNDIG Aktiengesellschaft, 90762 Fürth (DE)
(72) Erfinder: Heider, Peter, Grundig E.M.V., Elektro-Mechanische, Co. KG, D-90748 Fürth (DE)

(56) Entgegenhaltungen:
- EP-A- 0 300 193
- EP-A- 0 375 467
- EP-A- 0 493 653
- FUNKSCHAU Bd. 63, Nr. 19 , September 1991 , MÜNCHEN Seiten 58 - 60 'SENDER AUTOMATISCH ERFA T'

## Beschreibung

Die Erfindung betrifft einen Fernsehempfänger zur Wiedergabe von terrestrisch übertragenen Fernsehsignalen und von über Satellit übertragenen, in einem Satellitenempfänger verarbeiteten Fernsehsignalen mit dem im Oberbegriff des Anspruchs 1 angegebenen Merkmalen. Die Erfindung betrifft weiterhin einen Satellitenempfänger mit den im Oberbegriff des Anspruchs 4 angegebenen Merkmalen.

Aus der Zeitschrift Elektor 4/90, S. 10-12, ist es bekannt, einen Satellitenempfänger und einen Fernsehempfänger über einen bidirektionalen Datenbus miteinander zu verbinden (D2B-Home-Bus).

Aus der Zeitschrift Funkschau 18/1989, S. 124-128, ist ein Fernsehempfänger mit einem integrierten Satelliten-Tuner bekannt.

Es ist auch bekannt, einen Fernsehempfänger, der zur Wiedergabe von terrestrisch übertragenen Fernsehsignalen vorgesehen ist, mit einem Satellitenempfänger zu verbinden und über Satellit übertragene Fernsehsignale auf dem Bildschirm des Fernsehempfängers wiederzugeben. Zur Anwahl eines über Satellit übertragenen Fernsehprogrammes wird üblicherweise der Fernsehempfänger mittels der Bedieneinheit auf einen dafür vorgesehenen Programmplatz bzw. in die sog. A/V-Stellung geschaltet und danach durch gleichzeitige Betätigung einer Sondertaste (SAT-Shift-Taste) und einer oder mehrerer Zifferntasten das gewünschte Programm angewählt.

Diese Vorgehensweise ist bedienerunfreundlich, da zur Anwahl eines über Satellit übertragenen Fernsehprogramms mehrere Tastenbetätigungen notwendig sind und da der Benutzer genau informiert sein muß, ob es sich bei dem von ihm gewünschten Programm um ein terrestrisch oder ein über Satellit übertragenes Programm handelt, um die nötige(n) Umschaltung(en) vornehmen zu können.

Die Aufgabe der Erfindung besteht darin, einen Weg aufzuzeigen, wie bei einem Fernsehempfänger mit den im Oberbegriff des Anspruchs 1 angegebenen Merkmalen die Bedienungsfreundlichkeit erhöht werden kann.

Diese Aufgabe wird bei einem Fernsehempfänger mit den im Oberbegriff des Anspruchs 1 angegebenen Merkmalen durch die im kennzeichnenden Teil des Anspruchs 1 angegebenen Merkmale gelöst. Vorteilhafte Ausgestaltungen der Erfindung ergeben sich aus den abhängigen Patentansprüchen 2 und 3. Der Anspruch 4 betrifft einen Satellitenempfänger mit einem Eingang für Steuersignale, die im Fernsehempfänger erzeugt werden.

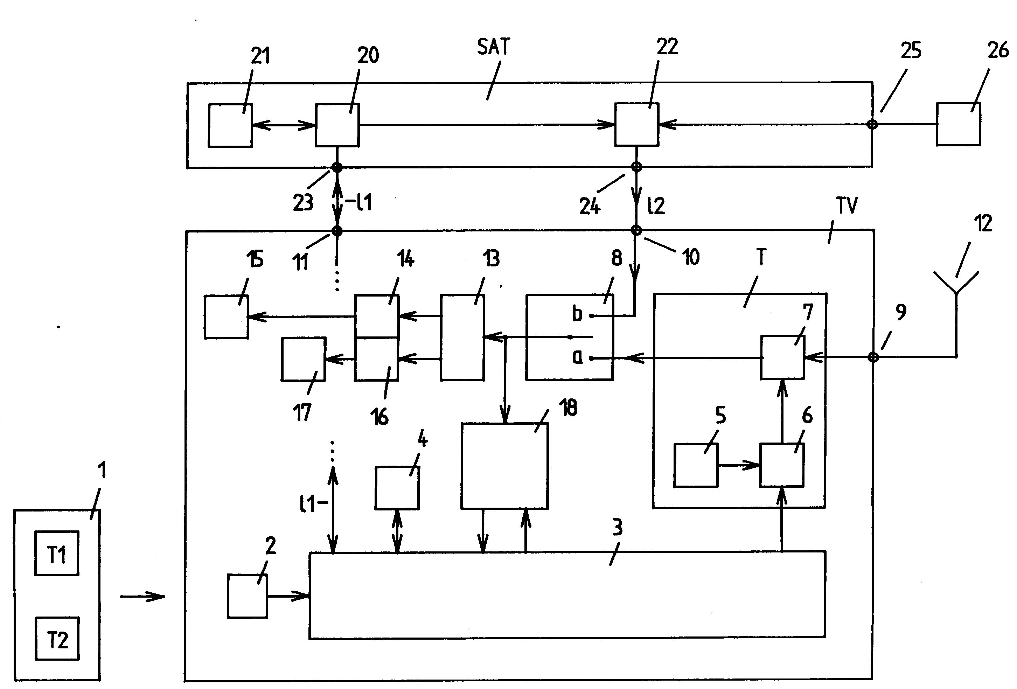

Im folgenden wird die Erfindung anhand eines in der Figur gezeigten Ausführungsbeispiels näher erläutert.

Die Figur zeigt einen Fernsehempfänger TV und einen mit dem Fernsehempfänger über eine bidirektionale Datenleitung l1 und ein Euro-AV-Kabel l2 verbundenen Satellitenempfänger SAT, wobei nur die zum Verständnis der Erfindung notwendigen Bauteile des Fernsehempfängers und des Satellitenempfängers gezeigt sind.

Der Fernsehempfänger TV weist einen Fernbedienungsgeber 1 mit Zifferntasten T1 und Funktionstasten T2, einen Fernbedienempfänger 2, einen Mikrocomputer 3, einen Senderspeicher 4, einen Tuner T mit einem Oszillator 5, einem Teiler 6 mit einstellbarem Teilungsverhältnis und einem Mischer 7, einen Schalter 8, eine nicht gezeichnete, zwischen dem Ausgang des Tuners T und der Klemme a des Schalters 8 angeordnete Schaltung zur Umwandlung des Ausgangssignals des Mischers 7 in ein FBAS-Signal, einen mit einer terrestrischen Empfangsantenne 12 verbundenen HF-Eingang 9, eine Euro-AV-Buchse 10, einen Datenanschluß 11, einen Baustein 13 zur Trennung von Bild- und Tonsignalen, eine Bildsignalverarbeitungsschaltung 14, einen Bildschirm 15, eine Tonsignalverarbeitungsschaltung 16, Lautsprecher 17 und eine Auswerteschaltung 18 auf.

Der Satellitenempfänger SAT besitzt einen Mikrocomputer 20, einen Satellitensenderspeicher 21, eine Signalverarbeitungsschaltung 22, einen Datenanschluß 23, eine Euro-AV-Buchse 24 und einen mit der Außeneinheit 26 einer Satellitenempfangsanlage verbundenen Eingang 25. In den einzelnen Speicherplätzen des Satellitensenderspeichers 21 sind für eine Vielzahl von Satellitensendern unter anderem die Nummer des jeweiligen Satellitenkanals, in welchem das vom jeweiligen Sender ausgestrahlte Programm übertragen wird, die jeweilige Senderbezeichnung und der Satellitenname abgespeichert. Diese Abspeicherung ist entweder bereits werksseitig erfolgt oder wurde vom Benutzer bei der ersten Inbetriebnahme des Satellitenempfänges durchgeführt.

Der Mikrocomputer 3 des Fernsehempfängers TV ist derart programmiert, daß er nach Eingabe eines Suchlauf-Startbefehls eine automatische Empfänger-Selbstprogrammierung steuert. Bei dieser Empfänger-Selbstprogrammierung wird zunächst das normale Fernsehraster (VHF-Band I, VHF-Band III, UHF-Band IV und UHF-Band V) und der Sonderkanalbereich (100 MHz - 170 MHz und 225-296 MHz) nach empfangbaren Fernsehsendern abgesucht.

Dazu werden die von der terrestrischen Empfangsantenne 12 gelieferten hochfrequenten Fernsehsignale über den HF-Eingang 9 dem Mischer 7 zugeführt und dort in eine Zwischenfrequenzlage umgesetzt. Dies geschieht unter Verwendung des Oszillators 5, dessen Ausgangssignal dem Teiler 6 mit einstellbarem Teilungsverhältnis zugeführt wird. Dieses Teilungsverhältnis wird vom Mikrocomputer 3 derart vorgegeben, daß das gewünschte schrittweise Durchsuchen des normalen Fernsehrasters und des Sonderkanalbereiches beispielsweise in Schritten von 1 MHz erfolgt. Während dieses schrittweisen Durchsuchens nach empfangbaren terrestrischen Sendern steuert der Mikrocomputer 3 den Schalter 8 in die Schaltstellung a, so daß in der Auswerteschaltung 18 überprüft werden kann, ob ein empfangswürdiger terrestrischer Sender vorliegt oder nicht. Als Kriterium dafür kann die Empfangsfeldstärke des Fernsehsignals und/oder die Bitfehlerrate von in den Austastlücken des Fernsehsignals übertragenen digitalen Signalen, beispielsweise von Fernsehtextsignalen, verwendet werden. Liegt ein empfangswürdiger terrestrischer Sender vor, so wird das zugehörige Teilungserhältnis in einem freien Speicherplatz des Senderspeichers 4 abgelegt. Danach wird der Suchvorgang fortgesetzt, bis die Teilungsverhältnisse aller empfangbaren terrestrischen Sender in aufeinanderfolgenden Speicherplätzen des Senderspeichers abgelegt sind.

Nach Beendigung des schrittweisen Durchsuchens der über die terrestrische Empfangsantenne empfangenen Fernsehsignale schaltet der Mikrocomputer 3 den Schalter 8 in die Schaltstellung b, so daß dieser für die über die Euro-AV-Buchse 10 kommenden Signale durchlässig ist. Bei diesen Signalen handelt es sich um über Satellit übertragene Fernsehsignale. Diese werden von der Außeneinheit 26, welche eine Satellitenantenne und einen 1. Frequenzumsetzer aufweist, über den Eingang 25 des Satellitenempfängers SAT der Signalverarbeitungsschaltung 22 des Satellitenempfängers zugeführt, dort in einem Satellitentuner einer 2. Frequenzumsetzung unterworfen, als FBAS-Signal an der Euro-AV-Buchse 24 des Satellitenempfängers SAT zur Verfügung gestellt und über das Euro-AV-Kabel l2 der Euro-AV-Buchse 10 des Fernsehempfängers zugeführt.

Um auch eine Empfänger-Selbstprogrammierung für die über Satellit übertragenen Fernsehsignale zu erreichen, gibt der Mikrocomputer 3 des Fernsehempfängers über die bidirektionale Datenleitung l1 ein Anforderungssignal an den Mikrocomputer 20 des Satellitenempfängers SAT. Aufgrund dieses Anforderungssignals liest der Mikrocomputer 20 aus dem Satellitensenderspeicher 21 des Satellitenempfängers nacheinander die Nummern der Satellitenkanäle aus und setzt sie in Ansteuersignale für die Signalverarbeitungsschaltung 22 um, so daß die in den jeweiligen Satellitenkanälen übertragenen Signale in Form von FBAS-Signalen an der Euro-AV-Buchse 24 des Satellitenempfängers zur Verfügung gestellt werden.

Von dort aus gelangen sie über das Euro-AV-Kabel 12, die Euro-AV-Buchse 10 und den Schalter 8 an die Auswerteschaltung 18. Dort wird das Signal - ebenso wie oben im Zusammenhang mit terrestrischen Signalen beschrieben wurde - daraufhin überprüft, ob es empfangswürdig ist oder nicht. Ist das der Fall, dann wird die zugehörige Programmplatzinformation des Senders im Satellitensendespeicher, die während der Abstimmung der Signalverarbeitungsschaltung 22 auf den jeweiligen Sender vom Mikrocomputer 20 des Satellitenempfängers über die Datenleitung l1 an den Mikrocomputer 3 des Fernsehempfängers geliefert wird, in einem freien Speicherplatz des Senderspeichers 4 des Fernsehempfängers TV abgelegt. Dieser Vorgang wird für alle n Satellitensender, deren Daten im Satellitensenderspeicher 21 abgespeichert sind, durchgeführt.

Sind auf diese Weise das normale Fernsehraster, die Sonderkanäle und alle Satellitenkanäle nach empfangbaren Sendern abgesucht, dann sind im Senderspeicher 4 des Fernsehempfängers für alle terrestrischen Fernsehsender in m aufeinanderfolgenden Speicherplätzen die jeweiligen Teilungsverhältnisse für die Frequenz des Oszillators 5 und für alle Satellitensender in n aufeinanderfolgenden Speicherplätzen die jeweilige Programmplatzinformation bwz. Speicherplatzinformation bezüglich des Satellitensenderspeichers 21 abgespeichert.

Diese Daten werden im nächsten Schritt automatisch nach bestimmten Kriterien sortiert. Geeignete Kriterien sind beispielsweise das Vorhandensein oder Fehlen von VPS-Signalen, das Vorhandensein oder Fehlen von Fernsehtextsignalen, usw.

Nach dieser Sortierung, die mit einer automatischen Vertauschung von Speicherplätzen innerhalb des Senderspeichers 4 verbunden ist, sind in den einzelnen Speicherplätzen des Senderspeichers 4 in einer Reihenfolge, die von den verwendeten Sortierkriterien abhängt, entweder einem terrestrischen Sender zugeordnete Informationen oder einem Satellitensender zugeordnete Informationen abgespeichert.

Diese können nach Betätigung einer Taste des Fernbedienungsgebers 1 in Tabellenform auf dem Bildschirm 15 dargestellt werden. Der Benutzer kann in dieser Tabelle unter Verwendung eines eingeblendeten Cursors und der Cursorsteuertasten eine individuelle Veränderung der Reihenfolge der im Senderspeicher 4 abgelegten Daten und damit der Stationstastennummern der einzelnen Sendungen vornehmen.

Gemäß einer vorteilhaften Ausgestaltung der Erfindung wird in jedem Speicherplatz des Senderspeichers 4 zusätzlich eine Kurzbezeichnung des jeweiligen Senders abgespeichert. Bei der Darstellung in Tabellenform auf dem Bildschirm werden diese Senderkurzbezeichnungen zusammen mit den weiteren Informationen wie Teilungsverhältnissen bzw. Programmplatzinformationen angezeigt. Diese Senderkurzbezeichnungen können entweder bei der Selbstprogrammierung des Fernsehempfängers aus den in den Vertikalaustastlücken der Fernsehsignale enthaltenen VPS- oder PDC-Daten (Video-Program-System, Programme Delivery Control) abgeleitet oder vom Benutzer eingegeben werden. Um dem Benutzer diese Eingabe zu erleichtern, wird auf dem Bildschirm des Fernsehempfängers eine Auswahlliste von Sendernamen zur Verfügung gestellt. Aus dieser Liste kann der Benutzer unter Verwendung des Cursors und der Cursorsteuertasten einen gewünschten Sendernamen auswählen und in die angezeigte Tabelle übernehmen.

Soll im späteren Gerätebetrieb ein gewünschtes Programm angewählt werden, dann muß der Benutzer lediglich mittels der Zifferntasten des Fernbedienungsgebers 1 die zugehörige Stationstastennummer eingeben. Diese Anwahl ist für alle Programme gleich, und zwar unabhängig davon, ob es sich um ein terrestrisches oder ein über Satellit ausgestrahltes Programm handelt. Der Benutzer muß demzufolge nicht mehr wissen, ob das jeweilige Programm von der terrestrischen Empfangsantenne oder von der Satellitenantenne empfangen wird.

Beim obigen Ausführungsbeispiel werden dem Fernsehempfänger vom Satellitenempfänger FBAS-Signale zugeführt. Es ist alternativ dazu ebenfalls möglich, die FBAS-Signale im Satellitenempfänger zu remodulieren und dem Fernsehempfänger in Form von HF-Signalen zuzuführen. In diesem Fall ist der Schalter 8 zwischen dem Eingang 10 des Fernsehempfängers und dem Eingang des Tuners T angeordnet.

## Patentansprüche

1. Fernsehempfänger zur Wiedergabe von terrestrisch übertragenen Femsehsignalen und von über Satellit übertragenen, in einem Satellitenempfänger verarbeiteten Fernsehsignalen, welcher aufweist:
- eine Bedieneinheit (1, 2) mit einer Zifferntastatur (T1) ) zur Eingabe einer gewünschten Stationstastennummer,
- einen Tuner (T) zur Umsetzung der terrestrisch übertragenen Fernsehsignale in Zwischenfrequenzsignale, wobei diese Umsetzung durch Mischung (7) der Fernsehsignale mit dem Ausgangssignal eines Oszillators (5) erreicht wird, welches über einen Teiler (6) mit einstellbarem Teilungsverhältnis geführt wird,
- einen Senderspeicher (4) mit einer ersten Anzahl m von Speicherplätzen zur Abspeicherung von Teilungsverhältnissen, wobei jeder der m Speicherplätze einer Stationstastennummer zugeordnet ist, und
- einen Mikrocomputer (3), der in Ansprache auf die Eingabe der Stationstastennummer die Anlegung des zugehörigen Teilungsverhältnisses an den Teiler (6) steuert,
**dadurch gekennzeichnet**, daß
- der Senderspeicher (4) eine zweite Anzahl n von Speicherplätzen zur Abspeicherung von Programmplatzinformationen für über Satellit übertragene Fernsehsignale aufweist, wobei jeder der n zusätzlichen Speicherplätze ebenfalls einer Stationstastennummer zugeordnet ist,
- der Mikrocomputer (3) bei Anwahl einer Stationstastennummer, die einem über Satellit übertragenen Fernsehsignal zugeordnet ist, ein die zugehörige Programmplatzinformation enthaltendes Steuersignal aus dem Senderspeicher (4) ausliest und dem Satellitenempfänger zur Verfügung stellt, und
- der Fernsehempfänger einen Datenanschluß (11) aufweist, über welchen ein Anforderungssignal an den Satellitenempfänger zur Einleitung einer Empfänger-Selbstprogrammierung für die über Satellit übertragenen Fernsehsignale ausgebbar ist und über welchen die im Satellitenempfänger erzeugten Programmplatzinformationen zur Abspeicherung in den genannten n zusätzlichen Speicherplätzen des Senderspeichers (4) empfangbar sind.

2. Fernsehempfänger nach Anspruch 1,
**dadurch gekennzeichnet,** daß
er einen Schalter (8) aufweist, dessem ersten Eingang von einer terrestrischen Empfangsantenne abgeleitete Fernsehsignale und dessem zweiten Eingang von einer Satellitenantenne abgeleitete Fernsehsignale zugeführt werden, und daß der Mikrocomputer (3) den Schalter (8) derart steuert, daß bei einer Selbstprogrammierung des Fernsehempfängers in einem ersten Suchschritt alle terrestrischen Fernsehkanäle und in einem zweiten Suchschritt alle Satellitenfernsehkanäle nach empfangbaren Sendern abgesucht werden.

3. Fernsehempfänger nach einem oder mehreren der vorhergehenden Ansprüche,
**dadurch gekennzeichnet**, daß
die Belegung des Senderspeichers (4) in Tabellenform auf dem Bildschirm auflistbar ist und daß zur Erleichterung der Eingabe einer Senderkurzbezeichnung eine Auswahlliste von Senderkurzbezeichnungen auf dem Bildschirm darstellbar ist.

4. Satellitenempfänger zur Umsetzung von von der Außeneinheit (26)
einer Satellitenempfangsanlage empfangenen Fernsehsignalen in Signale, die von einem herkömmlichen Femsehempfänger verarbeitbar sind, mit einem Mikrocomputer, einem Satellitensenderspeicher, einer Signalverarbeitungsschaltung, einer Euro-AV-Buchse, einem Signalausgang, an welchem die Signale für den Fernsehempfänger zur Verfügung gestellt werden, und einem Datenanschluß (23) für Steuersignale, die im Fernsehempfänger (TV) erzeugt werden,
**dadurch gekennzeichnet**, daß
dem Datenanschluß (23) ein in einem Femsehempfänger erzeugtes Anforderungssignal zur Einleitung einer Empfänger-Selbstprogrammierung für über Satellit übertragene Fernsehsignale zuführbar ist, aufgrund dessen der Mikrocomputer (20) aus dem Satellitensenderspeicher (21) nacheinander die Nummern der Satellitenkanäle ausliest und in Ansteuersignale für die Signalverarbeitungsschaltung (22) umsetzt, so daß die in den jeweiligen Satellitenkanälen übertragenen Signale an der Euro-AV-Buchse (24) zur Verfügung gestellt werden, und daß der Satellitenempfänger an dem Datenanschluß (23) weiterhin eine einem Satellitensender zugehörige Programmplatzinformation des Satellitenempfängers zur Verfügung stellt.

## Claims

1. Television receiver for reproducing terrestrially transmitted television signals and television signals transmitted via satellite and processed in a satellite receiver, which comprises:
- an operating unit (1, 2) having a numerical keyboard (T1) for entering a desired station key number,
- a tuner (T) for converting the terrestrially transmitted television signals into intermediate-frequency signals, said conversion being achieved by mixing (7) the television signals with the output signal of an oscillator (5), which output signal is fed via a divider (6) having adjustable division ratio,
- a transmitter memory (4) having a first number m of memory locations for storing division ratios, each of the m memory locations being assigned to a station key number, and
- a microcomputer (3) which, in response to the entry of the station key number, controls the application of the associated division ratio to the divider (6),
characterized in that
- the transmitter memory (4) has a second number n of memory locations for storing programme location information for television signals transmitted via satellite, each of the n additional memory locations also being assigned to a station key number,
- when a station key number which is assigned to a television signal transmitted via satellite is selected, the microcomputer (3) reads out a control signal containing the associated programme location information from the transmitter memory (4) and supplies it to the satellite receiver, and
- the television receiver has a data connection (11) via which a request signal can be emitted to the satellite receiver for initiating a receiver self-programming for the television signals transmitted via satellite and via which the programme location information generated in the satellite receiver can be received for storage in the said n additional memory locations of the transmitter memory (4).

2. Television receiver according to Claim 1, characterized in that it has a switch (8) to whose first input television signals are fed which are derived from a terrestrial receiving aerial and to whose second input television signals are fed which are derived from a satellite aerial, and in that the microcomputer (3) controls the switch (8) in such a way that, during a self-programming of the television receiver, all the terrestrial television channels are scanned for receivable transmitters in a first search step and all the satellite television channels are scanned for receivable transmitters in a second search step.

3. Television receiver according to one or more of the preceding claims, characterized in that the allocation of the transmitter memory (4) can be listed in tabular form on the viewing screen and in that, to facilitate the entry of an abbreviated transmitter designation, a selection list of abbreviated transmitter designations can be displayed on the viewing screen.

4. Satellite receiver for converting television signals received by the external unit (26) of a satellite receiving system into signals which can be processed by a conventional television receiver having a microcomputer, a satellite transmitter memory, a signal processing circuit, a Euro AV socket, a signal output to which the signals for the television receiver are supplied and a data connection (23) for the control signals which are generated in the television receiver (TV), characterized in that a request signal generated in a television receiver for initiating a receiver self-programming for television signals transmitted via satellite can be fed to the data connection (23), on the basis of which signal the microcomputer (20) consecutively reads out the numbers of the satellite channels from the satellite transmitter memory (21) and converts them into control signals for the signal processing circuit (22) so that the signals transmitted in the respective satellite channels are supplied to the Euro AV socket (24), and in that the satellite receiver furthermore supplies an item of programme location information, associated with a satellite transmitter, of the satellite receiver to the data connection (23).

## Revendications

1. Récepteur de télévision pour la reproduction de signaux de télévision transmis par voie terrestre et de signaux de télévision transmis par satellite et traités dans un récepteur de satellite, et qui comprend :
- une unité de commande (1,2) comportant un clavier à chiffres (T1) pour introduire un numéro désiré de touche de station,
- un tuner (T) pour amener par conversion les signaux de télévision transmis par voie terrestre dans des signaux à une fréquence intermédiaire, cette conversion étant obtenue par mélange (7) des signaux de télévision et du signal de sortie d'un oscillateur (5), qui est envoyé par l'intermédiaire d'un diviseur (6) ayant un rapport de division réglable,
- une mémoire d'émetteurs (4) comportant un premier nombre m d'emplacements de mémoire pour mémoriser des rapports de division, chacun des m emplacements de mémoire étant associé à un numéro de touche de station, et
- un micro-ordinateur (3), qui, en réponse à l'introduction du numéro de poste de station, commande l'application du rapport de division associé, au diviseur (6),
caractérisé en ce que
- la mémoire d'émetteurs (4) contient un second nombre n d'emplacements de mémoire pour mémoriser des informations d'emplacements de programmes pour des signaux de télévision transmis par satellite, chacun des n emplacements de mémoire supplémentaires étant également associé à un numéro de touche de station,
- lors de la sélection d'un numéro de touche de station, qui est associé à un signal de télévision transmis par satellite, le micro-ordinateur (3) lit un signal de commande, qui contient l'information associée d'emplacement de programme, dans la mémoire d'émetteurs (4) et le met à la disposition du récepteur de satellite, et
- le récepteur de télévision comporte une borne (11) de transmission de données, au moyen de laquelle un signal de demande peut être envoyé au récepteur de satellite pour déclencher une auto-programmation du récepteur pour les signaux de télévision transmis par satellite, et au moyen de laquelle les informations d'emplacements de programmes, produits dans le récepteur de satellite, peuvent être reçus pour être mémorisés dans lesdits n emplacements supplémentaires de la mémoire d'émetteurs (4).

2. Récepteur de télévision selon la revendication 1, caractérisé en ce qu'il comporte un commutateur (8), à la première entrée duquel sont envoyés des signaux de télévision dérivés d'une antenne de réception terrestre, et à la seconde entrée duquel sont envoyés des signaux de télévision dérivés d'une antenne de satellite, et que le micro-ordinateur (3) commande le commutateur (8) de telle sorte que, dans le cas d'une auto-programmation du récepteur de télévision, des émetteurs pouvant être reçus sont recherchés lors d'une première étape de recherche, dans tous les canaux de télévision terrestres et, lors d'une seconde étape de recherche, dans tous les canaux de télévision par satellite.

3. Récepteur de télévision selon une ou plusieurs des revendications précédentes, caractérisé en ce que l'occupation de la mémoire d'émetteurs (4) peut être listée sous la forme d'un tableau sur l'écran et que pour faciliter l'entrée d'une désignation abrégée d'émetteurs, une liste de sélection de désignations abrégées d'émetteurs peut être représentée sur l'écran.

4. Récepteur de satellite pour la conversion de signaux de télévision reçus de la part de l'unité extérieure (26) d'une installation de réception de satellite en des signaux qui peuvent être traités par un récepteur usuel de télévision, comportant un micro-ordinateur, une mémoire d'émetteurs de satellite, un circuit de traitement de signaux, une douille Euro-AV, une sortie des signaux, sur laquelle des signaux pour le récepteur de télévision sont disponibles, et une borne (23) de transmission de données pour les signaux de commande, qui sont produits dans le récepteur de télévision (TV), caractérisé en ce qu'à la borne (23) de transmission de données peut être envoyé un signal de demande, produit par un récepteur de télévision, pour le déclenchement d'une autoprogrammation du récepteur pour des signaux de télévision transmis par satellite et sur la base duquel le micro-ordinateur (20) lit successivement, à partir de la mémoire d'émetteurs de satellite (21), les numéros des canaux de satellite et les convertit en des signaux de commande pour le circuit de traitement de signaux (22), de sorte que les signaux transmis dans les canaux respectifs du satellite sont délivrés à la douille Euro-AV (24) et que le récepteur de satellite délivre en outre, au niveau de la borne (23) de transmission de données, une information d'emplacement de programme, associée à un émetteur de satellite, du récepteur de satellite.
